# EUROPEAN PATENT APPLICATION

(11) **EP 2 363 834 A1**
(43) Date of publication of application: **07.09.2011**
(21) Application number: 11156691.5
(22) Date of filing: 02.03.2011
(51) Int. Cl.: G06T 7/60, G09B 11/00

(54) **Multimedia system for learning games and jigsaw puzzles**

(30) Priority: 04.03.2010 IT MC20100033
(71) Applicant: Clementoni S.P.A., 62019 Recanati (IT)
(72) Inventor: Moretti, FRANCESCO, 62019, RECANATI (MC) (IT)
(74) Representative: Baldi, Claudio

(57) **Abstract**

A multimedia system (100) for learning games and jigsaw puzzles is disclosed, comprising: a learning game or puzzle (4) comprising a plurality of items (40), a computer (1), a webcam (2) connected to the computer (1), a video display unit (3) connected to the computer (1), at least one marker (M) applied on at least one of said items of the learning game or puzzle, and detection and processing means (10), operatively connected to said webcam (2) and said video display unit (3) to detect said marker (M) when it is framed by the webcam (2) and, according to the type of marker, generate an event (30), such a film or image relevant to the game or puzzle to which said marker is connected, which is displayed on said video display unit (3).

## Description

The present patent application for industrial invention relates to a multimedia system for learning games and jigsaw puzzles.

Several types of learning games for children are available on the market.

A very popular game comprises a plurality of cards portraying objects, animals, letters and numbers. Two or more cards can be fitted, with jigsaw puzzle system, if they comply with a correct matching criterion. In this way children are stimulated to search for the correct matching.

An evolution of said learning game is represented by the provision of cards with multiple answers. Each answer corresponds to a pad. The pad of correct answers is marked with conductive ink, whereas the pad of incorrect answers is marked with non-conductive ink. The game is supplied with a pen provided with buzzer and conductive tip. When the tip of the pen is placed on the correct answer, an electrical circuit is closed and the buzzer is activated, informing the user that the answer is correct.

Finally, traditional jigsaw puzzles are known, for adults (generally more than one hundred pieces) and for children (generally less than one hundred pieces).

All the aforementioned games are impaired by the fact that they are rather monotonous. As a matter of fact, after playing for a certain period of time, the child or adult is no longer stimulated to play with the same game again.

The purpose of the present invention is to eliminate the drawbacks of the prior art, by devising a multimedia system for learning games and jigsaw puzzles, which is versatile, various and able to attract the user's attention and interest.

Another object of the present invention is to provide such a multimedia system that is updatable, inexpensive and easy to make and play.

These purposes are achieved according to the invention, with the characteristics that are listed in the attached independent claim 1.

Advantageous realizations appear from the dependent claims.

Additional characteristics of the invention will become evident from the detailed description below, which refers to a merely illustrative, not limiting, embodiment, as shown in the enclosed figures, wherein:
Fig. 1 is a block diagram that generically shows the multimedia system of the invention;
Fig. 2 is a diagrammatic view that shows two cards of a first learning game to which the multimedia system of the invention is applied;
Fig. 2A is a view of the back side of a card of Fig. 2;
Figs. 3 - 7 are diagrammatic views of various operational steps of the multimedia system of the invention applied to the learning game of Figs. 2 and 2A;
Fig. 8 is a diagrammatic view that shows a plurality of cards and a conductive pen of a second learning game to which the multimedia system of the invention is applied;
Figs. 9 - 10 are diagrammatic views of various operational steps of the multimedia system of the invention applied to the learning game of Fig. 8;
Fig. 11 is a diagrammatic view of the operation of the multimedia system of the invention applied to a jigsaw puzzle.

The multimedia system of the invention is described with reference to the figures.

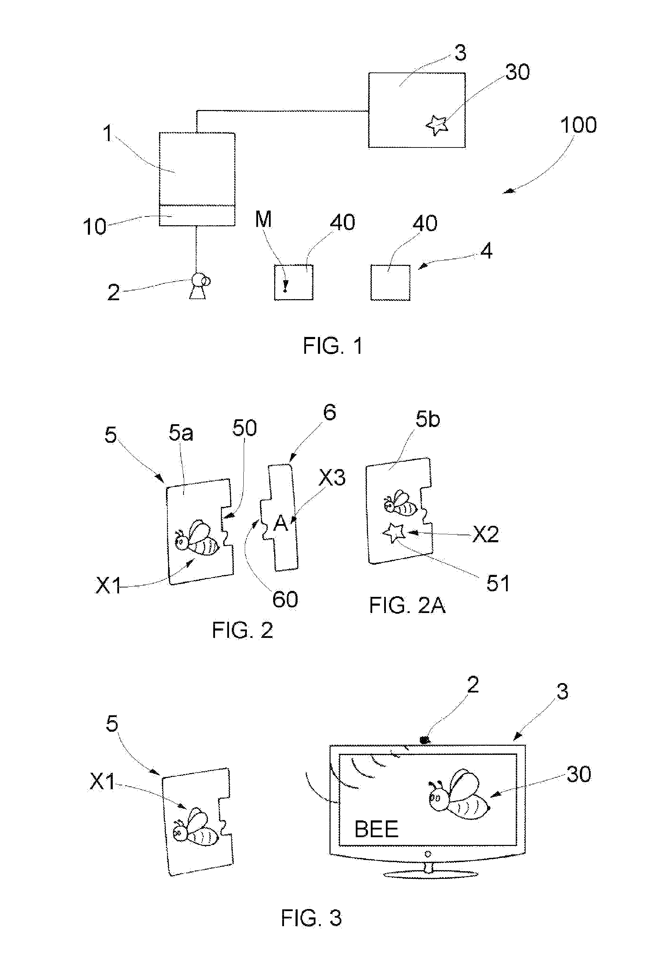

Referring to Fig.1, a generic multimedia system according to the invention is described and generally indicated with numeral (100). The multimedia system (100) comprises:
- a learning game or puzzle (4) comprising a plurality of items (40),
- a computer (1), such as a personal computer,
- a webcam (2) connected to the computer (1), and
- a video (3) connected to the computer (1).

On at least one of said items (40) of the game or puzzle, at least one marker (M) is applied. The marker (M) can be a symbol, a graphic representation, one or more numerical or alphanumerical characters or a color.

Detection and processing means (10) are operatively connected to said webcam (2) and video display unit (3). Said detection and processing means (10) can be a computer vision and tracking software application (10). Advantageously, said application (10) can be installed on a Web site that can be accessed over a telecommunication network, such as the Internet. So, all computers (1) connected to the network can access the application (10).

Clearly, the application (10) can also be installed in individual computers (1).

When the marker (M) is framed by the webcam (2), the application (10) detects the marker (4) and associates it with an event (30), such as a video or image displayed on the video display unit (3). Obviously, the event (30) is connected to the game or puzzle (4) that contains objects with the marker.

To that end, the application (10) must provide for a recognition procedure based on certain graphic representations or colors of the marker (M).

Advantageously, the application (10) also provides for a video tracking procedure, by means of which it can follow the movement of the marker (M) that is conveniently moved by the user, as hereinafter illustrated.

Referring to Fig. 2, a learning game is described, comprising a plurality of large cards (5) representing animals or objects and a plurality of small cards (6) representing the initial alphabet letter of the animal or object shown on the large card (5). In such a case, the large card (5) and the small card (6) are provided with corresponding jigsaw puzzle fitting systems (50, 60) that are fitted together only on condition that the letter of the small card (6) coincides with the initial letter of the animal or object of the large card (5).

Each large card (5) has a front side (5a) (Fig. 2) and a back side (5b) (Fig. 2A). According to the invention, the back side (5b) of each large card (5) has a sign (51) that differentiates it from the front side (5a).

According to the invention, each matching of cards, as the one illustrated in Figs. 2 and 2A, comprise three different markers: a first marker (X1) on the front side of the large card, a second marker (X2) on the back side of the large card and a third marker (X3) on the front side of the small card. Each marker can be composed of the animal, object or letter represented on the card or by an additional sign or color of the card.

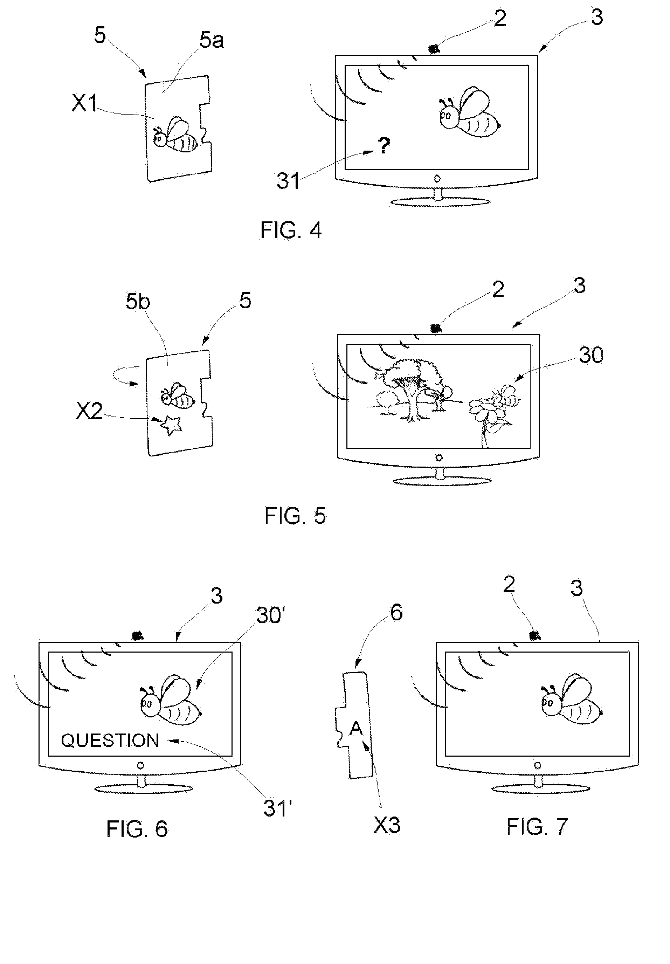

Two playing modes are possible ("discover" mode and "quiz" mode). The "discover" mode is played only with the large cards (5) and is illustrated in Figs. 3 - 5. Instead, the "quiz" mode is played with the small cards (6) and is illustrated in Figs. 6 and 7.

Referring to Fig. 3, when the child shows the front side of the large card (5) to the webcam (2), the program (10) recognizes the marker (X1) and displays an event (30) associated with the marker (X1) on the video display unit (3). The event (30) can be a film that takes the child to learn a skill related with the card, such as spelling the word "APE".

Referring to Fig. 4, when the film related with the event (30) is finished, the program (10) displays a second event (31) on the video display unit (3), which refers to a decision-making point that suggests the child to make a second action, such as rotating the card (5) to show the back side of the card to the webcam (2).

Referring to Fig. 5, after the child has rotated the card (5), the webcam (2) detects the marker (X2) on the back side of the card. So, the program (10) recognizes the new marker (X2) and displays a new event (30) related with the marker (X2) on the video display unit (3). Such a new event can be a film containing new information on the specific issue, for example bees in their natural environment.

When the film is finished, the program will display another event on the video display unit, which refers to a decision-making point that suggests the child to make another action, such as for example taking another card to show to the webcam (2).

Referring to Fig. 6, if the "quiz" mode is selected, the program (10) displays an event (30') on the video display unit (3), such as a film asking a question (31'), such as the initial letter of the animal "APE" (the English translation of the Italian word "APE" is "BEE") represented in the film.

In order to answer the question, the child chooses the card with letter "A" from the small cards (6) and shows it to the webcam (2), as shown in Fig. 7. The program (10) recognizes the marker (X3) relevant to letter "A" and decides that the answer is correct, sending a film to confirm that the answer is correct, then sends a new film on another animal or object, asking a new question.

If the child erroneously takes a card with a letter different from "A" with a marker different from X3, the program detects that there is no correspondence between the chosen card and the answer and sends a film that tells that the answer is incorrect, giving a new chance to the child.

In the learning procedure, at each marker (X1, X2) detected by the webcam (2) a film is associated and displayed on the video display unit (3). Instead, in the "quiz" procedure, a marker is associated with each film displayed by the video display unit (3), therefore the program (10) compares the marker associated with the film and the marker displayed by the webcam to decide whether the answer is correct or incorrect.

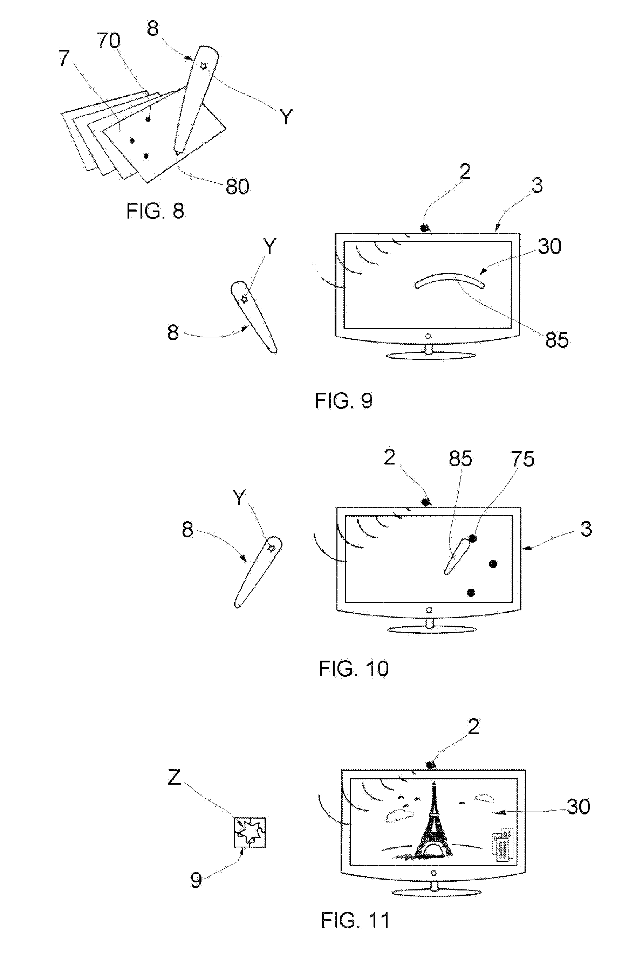

Referring to Fig. 8, a learning game is illustrated, comprising a plurality of cards (7) with multiple answers distinguished by corresponding pads (70). The pad (70) is of conductive ink only for correct answers. A pen (8) comprises a conductive tip (80) connected to a buzzer inside the pen. When the tip (80) of the pen touches the pad (70) with conductive ink, an electrical circuit is closed and the buzzer is activated to inform that the answer is correct.

According to the invention, a marker (Y) is applied on the pen (8). As shown in Fig. 9, when the pen (8) is shown to the webcam (2), the program (10) detects the marker (Y) and displays an event (30) on the video display unit, in this case being a video tracking application, wherein the movement of the pen (8) corresponds to the movement of a pointer (85) on the video (3). So, the pen (8) acts as mouse.

As shown in Fig. 10, then the program displays the image of a card (7) with multiple answers on the video display unit (3), wherein the pads (70) of the answers correspond to surfaces (75) highlighted in correspondence of each answer. By moving the pen (8), the user points to a surface (75) of the image and the program carries out a recognition procedure that ends with an event informing the user on the result of the answer.

Referring to Fig. 11, as it is known, a jigsaw puzzle provides for a plurality of pieces (9) to be fitted mutually. According to the invention, a marker (Z) is applied on at least one of said pieces (9). When the marker is shown to the webcam (2), the program (10) recognized the marker (Z) and carries out an event (30) that corresponds to a video on the puzzle. Advantageously, the puzzle provides for additional markers for interacting with the initial video.

Numerous variations and modifications can be made to the present embodiments of the invention by an expert of the field, while still falling within the scope of the invention as claimed in the enclosed claims.

## Claims

1. Multimedia system (100) for learning games and jigsaw puzzles, comprising:
- a learning game or jigsaw puzzle (4) comprising a plurality of items (40; 5, 6; 7, 8; 9),
- a computer (1),
- a webcam (2) connected to the computer (1),
- a video display unit (3) connected to the computer (1),
- at least a marker (M; X1, X2; X3; Y; Z) applied on at least one of said items of the learning game or jigsaw puzzle, and
- detection and processing means (10), operatively connected to said webcam (2) and said video display unit (3) to detect said marker (M) when it is framed by the webcam (2) and in accordance with the type of detected marker generate an event (30), such as a video or image relevant to the game or puzzle to which said marker is connected, which is displayed on said video display unit (3), said detection and processing means (10) comprising a program on a Web site that can be accessed by means of telecommunication network.

2. Multimedia system (100) as claimed in claim 1 or 2, **characterized in that** said marker (M) comprises a symbol, a numerical or alphanumerical character, and/or a color.

3. Multimedia system (100) as claimed in any one of the above claims, **characterized in that** said learning game comprises a plurality of cards (5, 6) representing objects, animals, letters and/or numbers to be combined together; a different marker (X1, X2, X3) being applied on each card (5, 6) that identifies the object, animal, letter and/or card number.

4. Multimedia system (100) as claimed in claim 3, **characterized in that** each of said cards (5) representing objects and/or animals has a front side (5a) and a back side (5b) and a first marker (X1) on the front side and a second marker (X2) on the back side.

5. Multimedia system (100) as claimed in claim 3, **characterized in that** said detection and processing means (1) display a video associated with a predefined marker on the video display unit (3) and compare the marker (X3) acquired by said webcam (2) with said predefined marker associated with the video.

6. Multimedia system (100) as claimed in any one of claims 1 to 2, **characterized in that** said learning game comprises a plurality of cards (7) with multiple answers distinguished by corresponding pads (70) and a pen (8) provided with a conductive tip connected to a buzzer that is activated when the conductive tip touches the pad (70) of the correct answer, wherein said marker (Y) is applied on said pen (8) and said detection and processing means (10) comprise a video tracking program that displays the movement of the pen (8) framed by the webcam (2) on the video display unit (3).

7. Multimedia system (100) as claimed in any one of claims 1 to 2, **characterized in that** said jigsaw puzzle comprises a plurality of pieces (9) wherein said marker (Z) is applied to at least one of said pieces.
